# EUROPÄISCHE PATENTANMELDUNG

(11) **EP 4 517 686 A1**
(43) Veröffentlichungstag der Anmeldung: **05.03.2025**
(21) Anmeldenummer: 23194547.8
(22) Anmeldetag: 31.08.2023
(51) Int. Cl.: G06V 10/762, G06V 10/82

(54) **VERFAHREN UND EIN SYSTEM ZUM KLASSIFIZIEREN MINDESTENS EINES BILD- UND/ODER VIDEODATUMS**

(71) Anmelder: Robert Bosch GmbH, 70442 Stuttgart (DE)
(72) Erfinder: Monka, Sebastian, 70469 Stuttgart (DE); Halilaj, Lavdim, 71229 Leonberg (DE)

(57) **Zusammenfassung**

Die vorliegende Anmeldung betrifft ein Verfahren zum Klassifizieren mindestens eines Bild- und/oder Videodatums, das Verfahren aufweisend die Schritte:
- Bereitstellen (S1) mindestens eines Bild- und/oder Videodatums, das Bildattribute aufweist, die einer Klasse innerhalb mindestens einer Domäne zugeordnet sind;
- Extrahieren (S2) der Bildattribute aus dem mindestens einen Bild- und/oder Videodatum mittels eines trainierten Attribut-Lernmodells;
- Vergleichen (S3), mittels einer Vergleichsmetrik, der extrahierten Bildattribute mit Informationen über die mindestens eine Domäne, die in einem Knowledge-Graphen umfasst sind; und
- Klassifizieren (S4) des mindestens eines Bild- und/oder Videodatums als zu der Klasse zugehörig basierend auf dem Vergleich.

## Beschreibung

Die Erfindung betrifft ein Verfahren und ein System zum Klassifizieren mindestens eines Bild- und/oder Videodatums. Ferner betrifft die Erfindung ein Computerprogramm mit Programmcode und einen computerlesbaren Datenträger.

### Stand der Technik

In der heutigen Zeit haben sich tiefe neuronale Netzwerke (DNN) als äußerst leistungsfähige Werkzeuge für das maschinelle Lernen erwiesen, insbesondere im Bereich der visuellen Einbettung. Durch die Verwendung textueller Beschreibungen werden Basismodelle trainiert, um eine visuelle Repräsentation von Objekten zu erzeugen. Allerdings stoßen diese Modelle an ihre Grenzen, wenn es darum geht, mit Szenarien umzugehen, in denen keine Daten und/oder Proben der Objekte während des Trainings verfügbar sind.

Um dieses Problem des geringen Datenaufkommens zu überwinden, wurden Ansätze entwickelt, die auf der Klassifizierung von Objektattributen basieren. Diese Methoden versuchen, Attribute wie Form, Farbe, Text usw. zu identifizieren, um die fehlende Informationsmenge zu kompensieren. Allerdings beruhen diese Ansätze oft auf manuell erstellten und ungenau definierten Strukturen, die es schwierig machen, neues Wissen zu integrieren und das Modell an andere Bereiche oder Anwendungsfälle anzupassen, ohne den gesamten Modellierungsprozess von Grund auf neu zu beginnen.

Aus der wissenschaftlichen Veröffentlichung [1] "Learning Visual Models using a Knowledge Graph as a Trainer."; https://arxiv.org/abs/2102.08747 ist eine Methode zum Trainieren tiefer neuronaler Netze mit semantischen Wissensgraphen/Ontologien bekannt.

Aus der wissenschaftlichen Veröffentlichung [2] "Radford, A., Kim, J. W., Hallacy, C., Ramesh, A., Goh, G., Agarwal, S., Sastry, G., Askell, A., Mishkin, P., Clark, J., Krueger, G., & Sutskever, I. (n.d.). Learning Transferable Visual Models From Natural Language Supervision" ist eine allgemeine Methode bekannt, die ein Foundation-Model (deutsch: Basismodell) anhand von Text und Bildern erlernt.

Aus der wissenschaftlichen Veröffentlichung [3] Christoph H. Lampert, Hannes Nickisch, und Stefan Harmeling (2014). Attribute-Based Classification for Zero-Shot Visual Object Categorization. https://hannes.nickisch.org/papers/articles/lampert13attributes.pdf ist ein Ansatz zur attributbasierten Klassifikation bekannt. Dabei werden Objekte auf der Grundlage einer High-Level-Beschreibung identifiziert, die in Form von semantischen Attributen formuliert ist, wie z. B. die Farbe oder Form des Objekts. Danach können neue Klassen auf der Grundlage ihrer attributiven Repräsentation erkannt werden, ohne dass eine neue Trainingsphase erforderlich ist.

Aus der wissenschaftlichen Veröffentlichung [4] Sebastian Monka, Lavdim Halilaj, und Achim Rettinger "Kontextgesteuerte visuelle Objekterkennung auf Basis von Wissensgraphen" ist es bekannt, wie ein Kontext eines Wissensgraphen eine Leistung eines Modells bei der Lösung einer Computer-Vision-Aufgabe beeinflusst.

Ansätze, wie beispielsweise in der Veröffentlichung [2] beschrieben, trainieren Basismodelle, indem sie beschreibende Bildunterschriften verwenden. Diese Bildunterschriften werden über Sprachmodelle in latente Vektoren, d.h. Worteinbettungen, umgewandelt. Anschließend werden die Einbettungen verwendet, um den Lernprozess der Basismodelle zu steuern. Sowohl der Textkorpus als auch die Bilder werden dabei aus dem Web gecrawlt. In Lernszenarien, bei denen keine Trainingsdaten vorhanden sind, unterscheidet sich jedoch ein Test- und/oder Inferenzdatensatz von dem Trainingsdatensatz. Beispielsweise befinden sich in dem Test- und/oder Inferenzdatensatz Objekte, wie Straßenschilder etc., die in den Trainingsdaten während des Trainings des Basismodells nicht vorhanden waren. Um diese Herausforderungen zu entschärfen, verwenden Ansätze, wie in der Veröffentlichung [3] beschrieben, Attribute, um derartige (unbekannte) Objekte in dem Test- und/oder Inferenzdatensatz zu beschreiben. Diese Attribute dienen als Zwischenschicht in einer Klassifikator-Kaskade und ermöglichen die Erkennung von Objektklassen, die während des Modelltrainings nicht vorhanden waren. Die Autoren der Veröffentlichung [2] haben jedoch eindeutig darauf hingewiesen, dass sich der Ansatz nicht an neue Kategorien anpassen lässt. Somit können neue Kategorien nicht einbezogen werden. Zudem ist der in der Veröffentlichung [2] vorgestellte Ansatz nur auf spezifizierte Trainingsmuster beschränkt und integriert nicht ein menschliches Wissen über eine spezifische Domäne.

Zusammengefasst stellen in der schnell voranschreitenden Welt des maschinellen Lernens insbesondere Lernszenarien, bei denen keine Trainingsdaten oder nur wenige und/oder eine unzureichende Menge an Trainingsdaten vorhanden sind, eine besondere Herausforderung dar. In solchen Lernszenarien stehen maschinelle Lernmodelle, beispielsweise bei Klassifizierungs- und/oder Segmentierungsaufgaben, nämlich vor der Herausforderung, Vorhersagegenauigkeiten zu erzielen, obwohl die zu klassifizierenden und/oder zu segmentierenden Objekte entweder noch nie zuvor gesehen wurden oder nur sehr wenige Trainingsbeispiele existieren. Die begrenzte Verfügbarkeit von Daten in diesen neuartigen Situationen macht es äußerst herausfordernd, präzise Vorhersagen durch ein (trainiertes) Klassifizierungs- und/oder Segmentierungsmodell zu treffen.

Um diesem Problem entgegenzuwirken, hat sich wie oben beschrieben gezeigt, dass die Verwendung hochrangiger und eindeutiger Attribute entscheidend ist, um eine gute Leistung in solchen datenarmen Szenarien zu erzielen. Indem man sich auf diese aussagekräftigen Attribute / Merkmale konzentriert, können maschinelle Lernmodelle ihre Fähigkeit zur Vorhersage verbessern und so auch in Situationen, in denen die Datenverfügbarkeit begrenzt ist, verbessertes Ergebnisse erzielen.

Auch wenn aus dem Stand der Technik bereits Verbesserungsansätze bekannt sind, besteht weiterhin Entwicklungspotenzial. Eine Aufgabe der Erfindung ist es, ein verbessertes Verfahren und/oder System zum Klassifizieren und/oder Segmentieren mindestens eines Bild- und/oder Videodatums anzugeben.

Die Aufgabe wird gelöst durch ein Verfahren zum Klassifizieren und/oder Segmentieren mindestens eines Bild- und/oder Videodatums gemäß den Merkmalen des Patentanspruchs 1. Die Aufgabe wird gelöst durch ein System zum Klassifizieren und/oder Segmentieren mindestens eines Bild- und/oder Videodatums gemäß den Merkmalen des Patentanspruchs 8.

### Offenbarung der Erfindung

Vorliegend wird gemäß einem ersten Aspekt ein Verfahren zum Klassifizieren und/oder Segmentieren mindestens eines Bild- und/oder Videodatums angegeben, das Verfahren aufweisend die Schritte:
- Bereitstellen mindestens eines Bild- und/oder Videodatums, das Bildattribute aufweist, die einer Klasse innerhalb mindestens einer Domäne zugeordnet sind;
- Extrahieren der Bildattribute aus dem mindestens einen Bild- und/oder Videodatum mittels eines trainierten Attribut-Lernmodells;
- Vergleichen, mittels einer Vergleichsmetrik, der extrahierten Bildattribute mit Informationen über die mindestens eine Domäne, die in einem Knowledge-Graphen umfasst sind; und
- Klassifizieren und/oder Segmentieren des mindestens eines Bild- und/oder Videodatums als zu der Klasse zugehörig basierend auf dem Vergleich.

Es versteht sich, dass die erfindungsmäßen Schritte sowie weitere optionale Schritte nicht notwendigerweise in der aufgezeigten Reihenfolge ausgeführt werden müssen, sondern auch in einer anderen Reihenfolge ausgeführt werden können. Ferner können weitere Zwischenschritte vorgesehen sein. Die einzelnen Schritte können zudem einen oder mehrere Unterschritte umfassen, ohne dass hierdurch der Umfang des erfindungsgemäßen Verfahrens verlassen wird.

Das Verfahren ermöglicht eine effektive Klassifizierung und/oder Segmentierung von Bild- und/oder Videodaten, indem es relevante Attribute extrahiert, und diese mit dem Wissen im Knowledge-Graph vergleicht, um eine genaue Zuordnung zu einer Klasse innerhalb der Domäne vorzunehmen. Hierdurch wird die Genauigkeit der Klassifizierung und/oder Segmentierung auch für unbekannte Objekte, die in den Bild- und/oder Videodaten umfasst sind, gegenüber dem Stand der Technik verbessert. Vorliegend kann vor der Klassifizierung und/oder Segmentierung des Bild- und/oder Videodatum zunächst eine Identifizierung übergeordneter Attribute in dem jeweiligen Bild- und/oder Videodatum erfolgen. Ferner werden die Attribute für jedes Objekt und/oder jede Klasse einer gegebenen Domäne in einem Wissensgraphen modelliert, z. B. dem RoadSigns Knowledge Graph (RSKG). Während der Inferenz werden die aus einem gegebenen Bild- und/oder Videodatum durch das Attribut-Lernmodell extrahierten Bildattribute als Eingabe für den Abfrage- und/oder Schlussfolgerungsprozess verwendet, wobei vorzugsweise vordefinierte und/oder in dem Knowledge-Graph umfasste Regeln und/oder Beziehungen zwischen Attributen aufgerufen werden, um dem jeweiligen Bild- und/oder Videodatum eine im Lichte des Knowledge-Graphen passende Klasse zuweisen zu können. Das vorliegende Verfahren zum Klassifizieren basiert auf der Konzeptualisierung und/oder Integration von in einem Knowledge-Graphen hinterlegen Domänenwissen insbesondere über semantische Axiome. Dieses vom Menschen bzw. einem Domänenexperten geschaffene Wissen lässt sich vorzugsweise in den Klassifizierungsprozess integrieren und/oder an Veränderungen anpassen, die in einem jeweiligen Bereich und/oder einer jeweiligen Domäne auftreten. Die aximotischen Regeln werden vorzugsweise zur Ableitung von Schlussfolgerungen auf der Grundlage der gegebenen Eingaben verwendet, um derart einem bislang unbekannten Bild- und/oder Videodatum bzw. einem darin umfassten, bislang für das Attribut-Lernmodell unbekannten Objekt eine korrekte Klasse zuzuweisen.

Beispielweise werden von einer Kamera oder einem bildgebenden Sensor Bild- und/oder Videodaten bereitgestellt, die klassifiziert werden sollen. Die Bild- und/oder Videodaten werden durch das Attribut-Lernmodell auf die jeweils darin umfassten Attribute hin analysiert. Das Attribut-Lernmodell ist dabei nicht in der Lage, die Bild- und/oder Videodaten unmittelbar zu klassifizieren. Das Attribut-Lernmodell ist also nicht in der Lage, unmittelbar zu erkennen, was in den Bild- und/oder Videodaten zu sehen ist (z.B. ein Objekt). Allerdings kann das Attribut-Lernmodell die Attribute bzw. Informationen über das jeweilige Bild- und/oder Videodatum extrahieren (z.B. Form, Hintergrund, Grenzen, Text eines Objektes etc.). Das Attribut-Lernmodell gibt also nicht direkt die Klasse des Bildes aus, sondern sämtliche Attribute, die aus dem Bild extrahierbar sind. Die extrahierten Attribute können dann durch den Vergleich einer bekannten Klasse zugeordnet werden. Das Attribut-Lernmodell wirkt somit als mittelbares Klassifizierermodell.

Ein "Knowledge-Graph" (deutsch: Wissensgraph) ist vorzugsweise eine strukturierte Datenbank, die Wissen und/oder Informationen über eine breite Palette von Domänen oder Themen aufweist. Der Knowledge-Graph weist vorzugsweise domänenspezifische Informationen auf. Es handelt sich vorzugsweise um ein semantisches Netzwerk, das durch die Verknüpfung von Entitäten (z.B. Personen, Orten, Ereignissen) mit ihren Attributen und Beziehungen Informationen in Form von Graphen darstellt. Durch die Organisation von Wissen in Form eines Knowledge-Graphs wird es vorzugsweise möglich, komplexe Zusammenhänge und/oder Abhängigkeiten zwischen verschiedenen Entitäten zu modellieren und zu verstehen. Der Graph ermöglicht es, Fragen zu stellen, Beziehungen zu erkunden, Zusammenhänge zu analysieren und/oder neues Wissen abzuleiten. Der Knowledge-Graph wird vorzugsweise von KI-Systemen und Suchmaschinen verwendet, um eine umfassendere und kontextbezogene Antwort auf Benutzeranfragen zu liefern. Durch die Verknüpfung und Auswertung von Informationen aus dem Wissensgraphen können KI-Systeme ein tieferes Verständnis von Texten, Fragen und Anfragen entwickeln und präzisere und relevantere Antworten generieren.

"Bildattribute" sind spezifische Merkmale oder Eigenschaften, die einem Bild zugeordnet sind und Informationen über seinen Inhalt liefern. Diese Attribute können visuelle Aspekte des Bildes beschreiben, wie zum Beispiel Farben, Formen, Texturen oder Objekte, aber auch abstraktere Konzepte wie Stimmung, Emotionen oder Szenen. Im Kontext der Bildverarbeitung und des maschinellen Lernens werden Bildattribute oft aus den Pixelwerten des Bildes extrahiert.

Hierbei können komplexe Algorithmen und neuronale Netzwerke eingesetzt werden, um bestimmte visuelle Merkmale zu erkennen und zu beschreiben.

Ein "Attribut-Lernmodell" ist vorzugsweise ein maschinelles Lernmodell, das dazu entwickelt und/oder trainiert ist, relevante Merkmale oder Attribute aus Daten zu extrahieren. Diese Attribute können verschiedene Informationen über die Daten repräsentieren und werden vorzugsweise verwendet, um die Daten in einer kompakteren und repräsentativeren Form darzustellen. In der Bildverarbeitung kann ein Attribut-Lernmodell beispielsweise dazu dienen, visuelle Merkmale aus Bildern zu identifizieren, wie Farben, Texturen, Formen oder die Anwesenheit bestimmter Objekte. Diese extrahierten Attribute können dann als Eingabe für weitere maschinelle Lernprozesse und/oder Aufgaben wie Bildklassifizierung, Objekterkennung oder Bildrekonstruktion dienen.

Im Kontext von maschinellem Lernen bezieht sich eine "Klasse" vorzugsweise auf eine Kategorie oder eine Gruppe von ähnlichen Objekten oder Entitäten, die bestimmte gemeinsame Merkmale oder Eigenschaften teilen. Eine "Domäne" steht vorzugsweise für einen bestimmten Bereich oder ein Themengebiet, in dem die Entitäten oder Daten existieren. Eine Klasse innerhalb einer Domäne kann als ein spezifischer Typ von Objekten betrachtet werden, der in einem bestimmten Kontext oder in einem bestimmten Wissensgebiet zusammengefasst wird. Beispielsweise könnten in der Domäne der Tiere verschiedene Klassen existieren, wie "Hunde", "Katzen", "Vögel" und "Fische". Jede Klasse umfasst vorzugsweise verschiedene Entitäten (z. B. verschiedene Rassen von Hunden oder Katzen) mit ähnlichen Merkmalen, die sie zu Mitgliedern dieser Klasse machen. Im maschinellen Lernen und der Bildverarbeitung ist die Klassifizierung eine wichtige Aufgabe, bei der ein Modell darauf trainiert wird, Daten in vordefinierte Klassen zu kategorisieren. Das bedeutet, dass das Modell lernen soll, die spezifischen Merkmale oder Attribute zu erkennen, die zu jeder Klasse gehören, und neue, unbekannte Daten in diese Klassen einzuteilen. Die Definition von Klassen innerhalb einer Domäne ist entscheidend für die Strukturierung und Organisation von Daten sowie für die Entwicklung effektiver maschineller Lernmodelle, die in der Lage sind, verschiedene Entitäten oder Objekte korrekt zu identifizieren und zu klassifizieren.

Durch das vorliegende Verfahren kann eine Klassifizierung und/oder Segmentierung von Bild- und/oder Videodaten erreicht werden, die auf semantischen Attributen der Bild- und/oder Videodaten basieren. Diese Attribute werden zur Beschreibung einer bestimmten Menge von Objekten verwendet. Zusätzlich sind die Attribute auch in einem domänenspezifischen Wissensgraphen dargestellt. Während der Inferenz, d.h. der Anwendung des Verfahrens, werden die Attribute eines unbekannten bzw. in einem Trainingsdatensatz eines Klassifikators nicht vorhandenen Objekts zur Vorhersage der richtigen Klasse verwendet, indem die Ähnlichkeit der Attribute mit Attributen von bekannten Objekten aus dem Wissensgraphen ermittelt wird. Die Attribute aus dem jeweiligen Bild- und/oder Videodatum können beispielsweise durch das Attribut-Lernmodell extrahiert sein. Vorliegend werden zur Verbesserung der Vorhersagegenauigkeit einer Klasse eines bislang unbekannten Objektes, die in einem Wissensgraphen bzw. Knowledge-Graphen (KG) umfassten Informationen mit einer zugrunde liegenden Ontologie verwendet. In dem KG werden vorzugsweise semantische Attribute auf einer hohen Ebene für jedes Objekt einer Domäne und/oder einer Klasse innerhalb einer Domäne modelliert. Diese Methode ermöglicht es, Vorwissen in einer strukturierten und kontrollierten Art und Weise zu integrieren, was sich als entscheidender Aspekt für die Verallgemeinerung und/oder Überführung und/oder Nutzung des Verfahrens für neue Klassen und/oder neue Domänen erweist. Somit ist die Adaptionsfähigkeit des Verfahrens an neuartige Situationen gegenüber dem Stand der Technik erhöht.

Der Knowledge-Graph weist vorzugsweise eine Vielzahl von Informationen auf und kann durch zusätzliche interne und/oder externe Quellen von Metadaten weiter angereichert werden. Viele Anwendungen liefern insbesondere zusätzlich zu Bilddaten automatisch graphbasierte Metadaten (Autonomes Fahren, Produktion, loT, etc.). Durch das vorliegende Verfahren können diese strukturierten Metadaten in Form von Attributen und insbesondere als High-Level-Beschreibung der jeweiligen Objekte ausgenutzt werden. Durch die Anwendung eines Knowledge-Graphen auf einen bestimmten Bereich können die Attribute der in den Bild- und/oder Videodaten umfassten Objekte, unabhängig davon, ob sie zuvor in Bild- und/oder Videodaten umfasst waren, extrahiert und für Ähnlichkeitsvergleiche mit den in dem Knowledge-Graphen modellierten Objekten verwendet werden. Dadurch eröffnen sich neue Möglichkeiten zur Erweiterung und Anpassung des Modells, ohne dass ein vollständiger Neuanfang erforderlich ist. Insbesondere zeigt sich, dass die Kombination von tiefen neuronalen Netzwerken und Wissensgraphen eine vielversprechende Richtung für die Verbesserung der Leistung von Modellen in datenarmen Szenarien darstellt. Die Integration von Vorwissen basierend auf Informationen aus einem Knowledge-Graphen verbessert auf diese Weise nicht nur die Lösungsgenerierung, sondern erhöht die Fähigkeit eines Modells, in neuen und/oder unerforschten Umgebungen erfolgreich zu generalisieren und/oder zu klassifizieren und/oder zu segmentieren.

Der vorliegende Ansatz bezieht sich auf die Konzeptualisierung und/oder Integration eines Domänenwissens über semantische Axiome. Dieses vom Menschen geschaffene Wissen kann integriert und an die Veränderungen, die in der jeweiligen Domäne auftreten, angepasst werden. Ferner ermöglicht die Codierung des Wissens in Form eines Wissensgraphen bzw. Knowledge-Graphen eine flexible Darstellung. Dieser Vektorraum wird verwendet, um die Ähnlichkeit mit den aus dem visuellen Raum extrahierten Attributen zu bestimmen. Mithilfe der Knowledge-Graphen, die die hohe Merkmalsausgabe des Basismodells begründet, können beispielsweise bislang unbekannte und/oder ungesehene Klassen vorhergesagt werden, ohne dass ein erneutes Training erforderlich ist. Das Neutrainieren dieser großen Modelle ist nämlich rechen- und datenintensiv und zudem fehleranfällig. Im Gegensatz dazu ist das Wissen der Knowledge-Graphen explizit, erklärbar und kann leicht an andere Aufgaben und/oder Klassen angepasst werden. Daher wird vorliegend das Attribut-Lernmodell für die Erkennung von Attributen verwendet, die als Input für aufgabenspezifische Knowledge-Graphen dienen.

Die Erfindung betrifft ferner eine Anpassung eines polynomialen Reduktionsalgorithmus zur Ausnutzung von Wortgrößenverschiebungen, die auf die Wortgröße der Computerhardware abgestimmt sind, basiert auf solchen technischen Überlegungen und kann dazu beitragen, den technischen Effekt einer effizienten Hardwareimplementierung des Algorithmus zu erzeugen.

Das vorliegende Verfahren bzw. das daraus hervorgehende Klassifizierer-Modell und/oder Attributlernmodell kann für die Analyse von (Bild- und/oder Video-) Daten verwendet werden, die von einem Sensor gewonnen werden. Vorliegend kann der Begriff "Bild- und/oder Videodaten" auch durch "Sensordaten" ersetzt werden. Der Sensor kann Messungen der Umgebung in Form von Sensorsignalen ermitteln, die z. B. durch folgende Elemente gegeben sein können, digitale Bilder, z. B. Video, Radar, LiDAR, Ultraschall, Bewegung, Wärmebilder, Audiosignale und/oder spezifische Daten, wie zum Beispiel, 1D-Daten (z. B. in der Produktion). Grundsätzlich ist es auch möglich, basierend auf einem Sensorsignal eine Information über Elemente, die durch das Sensorsignal kodiert sind, zu erhalten. Mit anderen Worten kann eine indirekte Messung basierend auf einem als direkte Messung verwendeten Sensorsignal durchgeführt werden. Dies wird auch als virtuelle Sensorik verstanden. Ferner kann das vorliegende Verfahren dazu verwendet werden, die Sensordaten zu klassifizieren und/oder zu kategorisieren und/oder zu segmentieren, um insbesondere das Vorhandensein oder Nicht-Vorhandensein von Objekten in den Sensordaten zu erkennen und/oder eine semantische Segmentierung der Sensordaten vorzunehmen, z. B. hinsichtlich Verkehrsschilder und/oder Straßenoberflächen und/oder Fußgängern und/oder Fahrzeugen und/oder sonstigem. Das vorliegende Verfahren kann auch zur Bestimmung eines kontinuierlichen Wertes oder mehrerer kontinuierlicher Werte verwendet werden, d.h. zur Durchführung einer Regressionsanalyse, z.B. bezüglich einer Entfernung und/oder einer Geschwindigkeit und/oder einer Beschleunigung und/oder einer Verfolgung eines Elements, z. B. eines Objekts, in den Daten. Das vorliegende Verfahren kann dazu verwendet werden, Anomalien in einem technischen System zu erkennen. Beispielsweise können Gauss-Abweichungen und/oder sonstige Unsicherheitswerte verwendet werden, um Anomalien zu erkennen.

Beispielsweise muss sichergestellt werden, dass ein automatisiertes Fahrzeug nicht mit Fußgängern zusammenstößt. Auf der Grundlage der semantischen Segmentierung berechnet insbesondere ein Computer eine Tiefeninformation aller in einem Bildraum vorhandenen Fußgänger, berechnet ferner eine Trajektorie um diese Fußgänger und steuert das autonom fahrende Fahrzeug so, dass es dieser Trajektorie so nahe folgt, dass es keine Fußgänger trifft. Dies gilt grundsätzlich auch für jeden mobilen Roboter, um derart Menschen zu vermeiden, die sich in seinem Fahrweg und/oder aus seinem Bewegungspfad befinden könnten. Hierzu kann das erfindungsgemäß Verfahren effektiv genutzt werden.

Ferner kann das erfindungsgemäße Verfahren in Kombination mit einem Regressionsalgorithmus genutzt werden, um insbesondere unter Verwendung von Daten von Gierraten- und/oder Linearbeschleunigungssensoren eines Fahrzeugs eine genaue räumliche Orientierung des Fahrzeugs zu ermitteln.

Vorliegend wird besonders bevorzugt auch ein Steuergerät beansprucht, das in einem autonomen Fahrzeug und/oder einem Robotiksystem und/oder einer industriellen Maschine umfasst ist, und auf dem das vorliegende Verfahren nach dem ersten Aspekt oder dem zweiten Aspekt zumindest teilweise ausführbar ist.

Durch das vorliegende, insbesondere aktiv lernenden Verfahren kann ein Attribut-Lernmodell und/oder ein Klassifizierer bereitgestellt werden, das bzw. der lernen kann zu ermitteln, in welchem Betriebspunkt eines Motors eine Abgasemission des Motors zu prüfen ist. Der Motor wird hierzu vorzugsweise in diesem Betriebspunkt betrieben, die Abgasemissionen werden gemessen und in das aktiv lernende Attribut-Lernmodell als Eingabedaten eingegeben, bis das Modell als gut genug erachtet wird.

In einem automatisierten Fahrzeug legt der hier beschriebene, insbesondere aktiv lernende Algorithmus bzw. das Attribut-Lernmodell bevorzugt vorbestimmte Szenarien fest, für die Bild- und/oder Videodaten und/oder Daten von alternativen Sensoren gesammelt werden sollen. Die von dem entsprechenden mindestens einen Sensor des Fahrzeugs erfassten Bild- und/oder Videodaten werden vorzugsweise durch das trainierte Attribut-Lernmodell analysiert, und das in den Bild- und/oder Videodaten dargestellte Szenario klassifiziert (z. B. durch Erkennung und/oder Klassifizierung von Objekten in den Bild- und/oder Videodaten. Entspricht das dargestellte Szenario einem vorbestimmten Szenario, wird das entsprechende Bild- und/oder Videodatum vorzugsweise an einen Back-End-Rechner übertragen, der insbesondere solche Bild- und/oder Videodaten von einer Vielzahl von Fahrzeugen sammelt und diese Bild- und/oder Videodaten zum aktiven (Nach-) Trainieren des Attribut-Lernmodells bzw. eines maschinellen Lernsystems, z. B. eines Bildklassifizierers, verwendet, das in dem automatisierten Fahrzeug vorzugsweise stetig und/oder zyklisch und/oder intervallweise aktualisiert wird.

In einem vernetzten physikalischen System, z. B. einem vernetzten automatisierten Fahrzeug, kann auch ein Anomaliedetektor verwendet werden, um zu erkennen, ob ein ausgewählter Frame von vordefinierter Länge (z. B. 5s) aus einer Beschleunigungssensor-Zeitreihe eine Anomalie aufweist. Ist dies der Fall, wird dieser Frame an einen Back-End-Rechner übermittelt, wo er z. B. zur Definition von Eckfällen für die Prüfung des ML-Systems verwendet werden kann, nach deren Ergebnis das angeschlossene physische System betrieben wird.

In einer bevorzugten Ausführungsform wird das Attribut-Lernmodell mittels der folgenden Schritte trainiert:
- Bereitstellen von Trainings-Bild- und/oder Videodaten, die jeweils vorbestimmte Bildattribute von mindestens einer Domäne und jeweils mindestens ein Klassenlabel aufweisen;
- Extrahieren von Bildattributen aus den Trainings-Bild- und/oder Videodaten durch das Attribut-Lernmodell;
- Abgleichen der extrahierten Bildattribute mit den vorbestimmten Bildattributen; und
- Optimieren einer Kostenfunktion des Attribut-Lernmodells in Abhängigkeit des Abgleichs und/oder bis zur Erreichung eines vorbestimmten Grenzwertes und/oder Abbruchkriteriums.

Das "Bereitstellen von Trainingsdaten" meint vorzugsweise, dass Trainings-Bild- und/oder Videodaten aus einer Datenbank und/oder von einem optischen Sensor verfügbar gemacht werden, um von dem Attribut-Lernmodell verarbeitet zu werden. Jedes Trainings-Bild- und/oder Videodatum weist dabei vorbestimmte Bildattribute auf, die sich auf das in dem jeweiligen Trainings-Bild- und/oder Videodatum umfasste Objekt und/oder Subjekt und/oder auf die mindestens eine Domäne beziehen. Ferner haben die Trainings-Bild- und/oder Videodaten jeweils mindestens ein Klassenlabel, das beispielsweise durch einen Experten vergeben oder andersartig bestimmt wird. Das "Extrahieren von Bildattributen" meint vorliegend vorzugsweise, dass das Attribut-Lernmodell Bildattribute, beispielsweise auf Pixeleben, aus den bereitgestellten Trainingsdaten extrahiert. Dieser Schritt ist bevorzugt, um die relevanten Merkmale aus den Bildern und/oder Videos zu identifizieren, die für die spätere Klassifikation verwendet werden. Das "Abgleichen der extrahierten Bildattribute" meint vorzugsweise, dass die extrahierten Bildattribute mit den vorbestimmten Bildattributen verglichen werden. Diese vorbestimmten Bildattribute können beispielsweise von einem Experten angegeben und/oder in einer Datenbank umfasst sein. Es wird überprüft, wie gut die vom Lernmodell extrahierten Attribute mit den tatsächlichen, vordefinierten Attributen übereinstimmen. Das "Optimieren der Kostenfunktion" meint vorzugsweise, dass das Attribut-Lernmodell seine Kostenfunktion in Abhängigkeit des Abgleichs optimiert. Die Kostenfunktion ist vorzugsweise ein Maß dafür, wie gut das Modell die Attribute erlernt und wie gut es die Klassenlabels vorhersagt. Die Optimierung wird entweder bis zur Erreichung eines vorbestimmten Grenzwertes oder eines bestimmten Abbruchkriteriums durchgeführt.

"Klassenlabeling", auch bekannt als Labeling, bezieht sich auf einen Prozess des Zuweisens mindestens einer Kategorie und/oder eines Tags zu visuellen Daten, wie Bildern und/oder Videos. Das Label oder die Bezeichnung sind vorzugsweise eine Beschreibung oder ein Tag, die/der spezifische Merkmale, Objekte oder Klassen in einem Bild identifiziert und kennzeichnet. Das Ziel der Bildkennzeichnung besteht vorzugsweise darin, den visuellen Inhalt zu verstehen und zu kategorisieren, um maschinelle Systeme zu trainieren, visuelle Informationen zu interpretieren und automatisierte Entscheidungen zu treffen. Durch das Labeln von Bildern können Computermodelle lernen, Objekte, Szenen, Aktivitäten oder bestimmte visuelle Merkmale zu erkennen und zu unterscheiden. Die Bildkennzeichnung kann verschiedene Formen annehmen, je nachdem, welche Informationen benötigt werden. Einzelne Objekte können zum Beispiel mit spezifischen Labels versehen werden, um sie in einer Szene zu identifizieren. Ferner können vorzugsweise auch Attribute, wie Farben, Formen oder Texturmerkmale, annotiert werden. In einigen Fällen werden auch räumliche Informationen wie die Position oder Ausdehnung der Objekte im Bild erfasst. Das Labeling von Bildern wird oft von menschlichen Annotatoren durchgeführt, die über visuelles Verständnis und Domänenkenntnisse verfügen. Sie analysieren das Bildmaterial und weisen den entsprechenden Labels zu. Diese Annotationen dienen dann als Grundlage für das Training von maschinellen Lernmodellen, die lernen, visuelle Muster zu erkennen und in der Lage sind, neue, nicht annotierte Bilder zu analysieren und zu klassifizieren.

In einer bevorzugten Ausführungsform weisen die Informationen über die mindestens eine Domäne, die in dem Knowledge-Graphen (204) umfasst sind, Attribute (206) und/oder Beziehungen (207) zwischen Attributen (206) und/oder daraus ableitbare Regeln auf.

In einer bevorzugten Ausführungsform basiert das Schlussfolgern mittels der Vergleichsmetrik darauf, dass die extrahierten Bildattribute mit Attributen und/oder Beziehungen zwischen Attributen und/oder den daraus ableitbaren Regeln abgeglichen werden, bis eine Übereinstimmung erreicht ist, oder zumindest bis eine vorbestimmte Anzahl der Bildattribute mit zumindest einer Teilmenge der Attribute und/oder der Beziehungen zwischen den Attributen und/oder den daraus ableitbaren Regeln übereinstimmt.

In einer bevorzugten Ausführungsform weist die Vergleichsmetrik ein Inferenz-Reasoning und/oder ein Transitive Reasoning und/oder ein kontextuelles Reasoning und/oder ein abduktives Reasoning auf. Im Kontext von Wissensgraphen bezieht sich "reasoning" auf den Prozess der schlussfolgernden Analyse und Ableitung neuer Informationen durch die Verwendung von logischen Regeln und Verknüpfungen innerhalb des Wissensgraphen. Ein Wissensgraph ist eine Datenstruktur, die Wissenspunkte (Knoten) und deren Beziehungen (Kanten) in einer hierarchischen oder vernetzten Form darstellt. Reasoning in Wissensgraphen ermöglicht es, implizites Wissen aus vorhandenen Informationen zu erschließen und Verbindungen zwischen verschiedenen Entitäten zu erkennen. Es kann verwendet werden, um Fragen zu beantworten, die nicht direkt durch vorhandene Fakten im Graphen beantwortet werden können, indem es indirekte Beziehungen und Zusammenhänge zwischen den vorhandenen Informationen aufdeckt. Das "Inferenz-Reasoning" erfolgt durch die Anwendung von logischen Regeln auf vorhandene Fakten im Wissensgraphen. So können neue Informationen abgeleitet werden. Zum Beispiel, wenn der Wissensgraph weiß, dass alle Menschen sterblich sind und eine Person als Mensch klassifiziert ist, kann das System schließen, dass diese Person sterblich ist. "Transitive Reasoning" wird verwendet, um vermittelte Beziehungen zwischen Entitäten zu identifizieren. Wenn beispielsweise Entität A mit Entität B verbunden ist und Entität B mit Entität C verbunden ist, ermöglicht transitives Reasoning zu schlussfolgern, dass Entität A indirekt mit Entität C verbunden ist. "Kontextuelles Reasoning" bezieht sich auf die Berücksichtigung des Kontexts, um präzisere Schlussfolgerungen zu ziehen. Das System kann verschiedene Quellen und Beziehungen im Wissensgraphen nutzen, um eine bessere Antwort auf eine spezifische Frage zu generieren. "Abduktives Reasoning" geht von Beobachtungen aus und schlägt Erklärungen oder Hypothesen vor, die diese Beobachtungen erklären können. Es ermöglicht, wenn nicht alle Fakten vorhanden sind, plausiblere Erklärungen zu finden. Derart können die extrahierten Bildattribute mit den Informationenen des Knowledge-Graphen verglichen werden, bis eine hinreichende Übereinstimmung gefunden wird, auf deren Basis eine Klassenzuweisung für das mindestens eine Bild- und/oder Videodatum erfolgen kann.

In einer bevorzugten Ausführungsform weist das Attribut-Lernmodell ein Basismodell auf, das vorzugsweise mittels eines tiefen neuronalen Netzwerks trainiert. Ein Attribut-Lernmodell kann verschiedene maschinelle Lerntechniken verwenden, wie zum Beispiel klassische Algorithmen wie Support Vector Machines (SVM) oder Entscheidungsbäume, aber auch Ansätze wie neuronale Netzwerke oder Deep Learning. Die Funktion eines Attribut-Lernmodells besteht darin, relevante Informationen aus den Daten zu extrahieren und sie in einer für maschinelle Lernmodelle leichter verarbeitbaren und aussagekräftigeren Form zu präsentieren. Dadurch wird die Leistungsfähigkeit und Effizienz von Lern- und Erkennungsaufgaben verbessert, da die Modelle auf aussagekräftigen Attributen basieren können, anstatt direkt auf den ursprünglichen, möglicherweise umfangreichen Rohdaten zu operieren. Das Erlernen der Attribute für jede gegebene Bild- und/oder Videodatum wird vorzugsweise durch ein spezielles Attribut-Lernmodell realisiert, das auf die Erkennung dieser Attribute abgestimmt ist. Das Attribut-Lernmodell kann ein visuelles Basismodell aufweisen. Die Verwendung eines Basismodells für die Attributerkennung ermöglicht eine Out-of-Distribution-Leistung. Die Out-of-Distribution-Leistung bezieht sich auf die Fähigkeit eines Modells, mit Daten umzugehen, die außerhalb des Trainingsdatensatzes liegen oder andersartig sind als die Daten, mit denen das Modell während des Trainings konfrontiert wurde. In anderen Worten, die Out-of-Distribution-Leistung beschreibt die Fähigkeit eines Modells, mit neuen, unbekannten oder unerwarteten Daten umzugehen, die möglicherweise nicht repräsentativ für die Daten sind, die während des Trainings verwendet wurden. Hierbei kann ein Deep-Neuronal-Network bzw. ein tiefes neuronales Netzwerk eingesetzt und/oder trainiert werden.

In einer bevorzugten Ausführungsform wird das mindestens eine Bild- und/oder Videodatum von mindestens einem optischen Sensor, insbesondere einer Kamera und/oder einem Lidar-Sensor und/oder einem Radar-Sensor und/oder einem Ultraschall-Sensor, erfasst. Grundsätzlich sind auch andere Sensoren und/oder Sensordaten vorstellbar, solange sie von dem Attribut-Lernmodell verarbeitbar sind.

In einer bevorzugten Ausführungsform wird das mindestens eine Bild- und/oder Videodatum durch Datenaugmentierung aus vorhandenen Bild- und/oder Videodaten erzeugt. Datenaugmentierung bezieht sich auf eine Technik im maschinellen Lernen, bei der künstlich neue Datenpunkte erzeugt werden, indem bestehende Daten transformiert und/oder modifiziert werden. Ziel der Datenaugmentierung ist es, den Umfang und die Vielfalt der verfügbaren Trainingsdaten zu erhöhen, um die Leistung und Robustheit von maschinellen Lernmodellen zu verbessern. Bei der Datenaugmentierung können verschiedene Transformationen angewendet werden, je nach Art der Daten und den Anforderungen des Modells. Im Bereich der Bildverarbeitung können insbesondere Operationen wie Zuschneiden, Skalieren, Drehen, Spiegeln oder Hinzufügen von Rauschen angewendet werden, um neue Bilder zu erzeugen, die sich leicht von den Originaldaten unterscheiden.

In einer bevorzugten Ausführungsform wird ferner eine Fertigungslinie umfassend die Gerätezusammenstellung zum Erzeugen von vorgebbaren Erzeugnissen bereitgestellt. Eine Fertigungslinie ist vorzugsweise eine Abfolge von Produktionsstationen und/oder Arbeitsbereichen, die so angeordnet sind, dass sie zusammenarbeiten, um mindestens ein Produkt herzustellen. Diese Produktionslinie kann verschiedene Geräte, Maschinen und/oder Anlagen umfassen, die für die Produktion der vorgegebenen Erzeugnisse konfiguriert sind. In dieser Ausführungsform wird betont, dass in der bevorzugten Ausführungsform eine spezifische Gerätezusammenstellung in der Fertigungslinie vorhanden ist. Diese Gerätezusammenstellung könnte insbesondere Maschinen, Roboter, automatisierte Montagelinien, Werkzeuge und/oder andere Geräte umfassen, die für die Produktion der vorgegebenen Erzeugnisse erforderlich sind.

In einer bevorzugten Ausführungsform umfasst das Verfahren nach der Bereitstellung der Fertigungslinie ferner den Schritt: Erzeugen zumindest eines vorgebbaren Erzeugnisses unter Verwendung der Gerätezusammenstellung. Nachdem die Fertigungslinie bereitgestellt wurde, wird gemäß dieser Ausführungsform ein Verfahren durchgeführt, das darauf abzielt, mindestens ein vorgebbares Erzeugnis herzustellen. Dieser Schritt erfolgt unter Verwendung der vorhandenen Gerätezusammenstellung in der Fertigungslinie. Es wird vorliegend nicht näher spezifiziert, um welche Art von Erzeugnis es sich handelt oder wie der genaue Ablauf des Herstellungsprozesses aussieht. Der Schwerpunkt liegt darauf, dass das Verfahren in der bevorzugten Ausführungsform darauf abzielt, mindestens ein vorgebbares Erzeugnis mithilfe der bereitgestellten Gerätezusammenstellung in der Fertigungslinie zu erzeugen.

Gemäß einem zweiten Aspekt wird ein System zum Klassifizieren mindestens eines Bild- und/oder Videodatums vorgeschlagen. Das System weist eine Bereitstellungseinrichtung auf, die ausgebildet ist, mindestens ein Bild- und/oder Videodatum, das Bildattribute aufweist, die einer Klasse innerhalb mindestens einer Domäne zugeordnet sind, bereitzustellen. Das System weist ferner eine Auswerte- und/oder Recheneinrichtung auf, die ausgebildet ist, die Bildattribute aus dem mindestens einen Bild- und/oder Videodatum mittels eines trainierten Attribut-Lernmodells zu extrahieren, die extrahierten Bildattribute mit Informationen über die mindestens eine Domäne, die in einem Knowledge-Graphen umfasst sind, mittels einer Vergleichsmetrik zu vergleichen, und das mindestens eine Bild- und/oder Videodatum, basierend auf dem Vergleich, als zu der Klasse zugehörig zu klassifizieren.

Gemäß einem weiteren Aspekt ist eine Auswerte- und/oder Steuereinrichtung eines bildgebenden Sensors vorgeschlagen, die dazu ausgebildet ist, das vorliegende Verfahren zum Klassifizieren und/oder Segmentieren gemäß einer beliebigen Ausführungsform auszuführen. Das bedeutet, dass die Auswerte- und/oder Steuereinrichtung eine Einrichtung oder Vorrichtung darstellt, die vorzugsweise in Verbindung mit einem bildgebenden Sensor verwendet wird. Die Auswerte- und/oder Steuereinrichtung kann beispielsweise eine Camera-Control-Unit (CCU) umfassen oder in einer solchen CCU umfasst sein. Ein bildgebender Sensor ist vorzugsweise ein Sensor, der dazu dient, visuelle Informationen zu erfassen und in elektronische Daten umzuwandeln, wie beispielsweise in der digitalen Bildverarbeitung oder in der medizinischen Bildgebung. Alternativ kann auch ein Audiosensor verwendet werden, wenn die zu klassifizierenden und/oder zu segmentierenden Daten beispielsweise Audiodaten umfassen.

Sämtliche Ausführungen und/oder Merkmale und/oder Merkmalsbeschreibungen, die in Zusammenhang mit dem Verfahren beschrieben wurden, gelten in gleicher Weise für das System und/oder die Auswerte- und/oder Steuereinrichtung.

Vorliegend ist auch ein Computerprogramm mit Programmcode beansprucht, um zumindest Teile des Verfahrens gemäß dem ersten Aspekt oder dem dritten Aspekt, jeweils in einer seiner Ausführungsformen, auszuführen, wenn das Computerprogramm auf einem Computer ausgeführt wird. Mit anderen Worten wird erfindungsgemäß ein Computerprogramm(-produkt), umfassend Befehle, die bei der Ausführung des Programms durch einen Computer diesen veranlassen, das Verfahren/die Schritte des erfindungsgemäßen Verfahrens in einer seiner Ausführungsformen auszuführen.

Vorliegend ist auch ein computerlesbarer Datenträger mit Programmcode eines Computerprogramms vorgeschlagen, um zumindest Teile des Verfahrens gemäß dem ersten Aspekt oder dem dritten Aspekt, jeweils in einer seiner Ausführungsformen, wenn das Computerprogramm auf einem Computer ausgeführt wird. Mit anderen Worten betrifft die Erfindung ein computerlesbares (Speicher-) Medium, umfassend Befehle, die bei der Ausführung durch einen Computer diesen veranlassen, das Verfahren/die Schritte des erfindungsgemäßen Verfahrens in einer seiner Ausführungsformen auszuführen.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Kontext der Beschreibung, der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
- Fig. 1: ein schematisches Flussdiagramm eines Ausführungsbeispiels des vorliegenden Verfahrens zum Klassifizieren eines Bild- und/oder Videodatums; und
- Fig. 2: ein schematisches Blockschaltbild eines Ausführungsbeispiels des vorliegenden Verfahrens, gezeigt eine Aufteilung in Trainingsphasen und eine Inferenzphase.

In den Figuren der Zeichnungen bezeichnen gleiche Bezugszeichen gleiche oder funktionsgleiche Elemente, Bauteile oder Komponenten, soweit nichts Gegenteiliges angegeben ist.

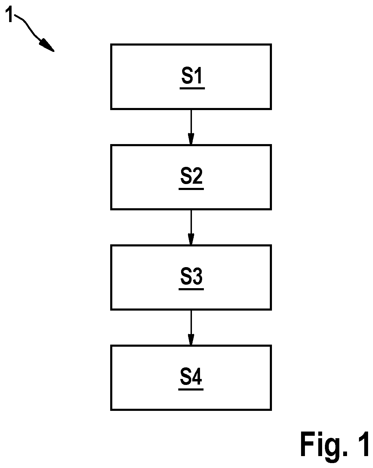

Figur 1 zeigt ein schematisches Flussdiagramm eines Verfahrens zum Klassifizieren mindestens eines Bild- und/oder Videodatums.

Das Verfahren kann in einer beliebigen Ausführungsform zumindest teilweise durch ein System 1 ausgeführt werden, das hierzu mehrere nicht näher dargestellte Komponenten, beispielsweise eine oder mehrere Bereitstellungseinrichtungen und/oder mindestens eine Auswerte- und Recheneinrichtung umfassen kann. Es versteht sich, dass die Bereitstellungseinrichtung gemeinsam mit der Auswerte- und Recheneinrichtung ausgebildet sein kann, oder von dieser unterschiedlich sein kann. Ferner kann das System eine Speichereinrichtung und/oder eine Ausgabeeinrichtung und/oder eine Anzeigeeinrichtung und/oder eine Eingabeeinrichtung umfassen.

Das computerimplementierte Verfahren umfasst erfindungsgemäß mindestens die folgenden Schritte:
In einem Schritt S1 erfolgt ein Bereitstellen mindestens eines Bild- und/oder Videodatums, das Bildattribute aufweist, die einer Klasse innerhalb mindestens einer Domäne zugeordnet sind.

In einem Schritt S2 erfolgt ein Extrahieren der Bildattribute aus dem mindestens einen Bild- und/oder Videodatum mittels eines trainierten Attribut-Lernmodells.

In einem Schritt S3 erfolgt ein Vergleichen, mittels einer Vergleichsmetrik, der extrahierten Bildattribute mit Informationen über die mindestens eine Domäne, die in einem Knowledge-Graphen umfasst sind.

In einem Schritt S4 erfolgt ein Klassifizieren des mindestens eines Bild- und/oder Videodatums als zu der Klasse zugehörig basierend auf dem Vergleich.

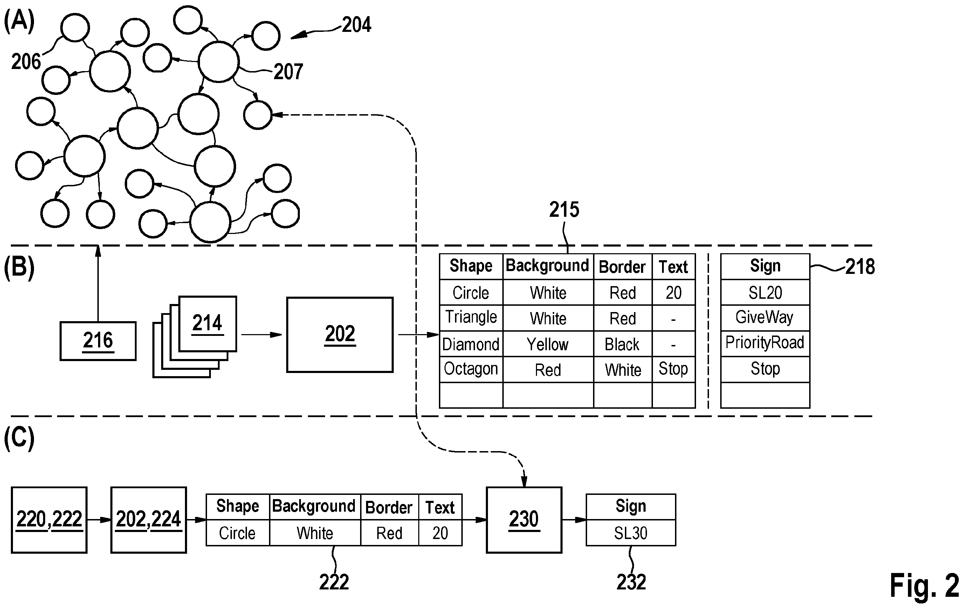

Fig. 2 zeigt ein schematisches Blockschaltbild eines Ausführungsbeispiels des vorliegenden Verfahrens zum Klassifizieren mindestens eines Bild- und/oder Videodatums.

Dabei ist das Verfahren zum Klassifizieren mindestens eines Bild- und/oder Videodatums während der Inferenz in dem abgetrennten Bereich (C) der Fig. 2 gezeigt. Der Bereich (A) zeigt einen beispielhaften Knowledge-Graphen 204. Der Bereich (B) zeigt einen beispielhaften Trainingsablauf zum Trainieren eines Attribut-Lernmodells 202.

### Zu Abschnitt (A):

Beispielsweise wird ein Knowledge-Graph 204 bereitgestellt, der Attribute 206 und/oder Beziehungen 207 zwischen Attributen 206 zu der mindestens einen Domäne aufweist.

### Zu Abschnitt (B):

Das Attribut-Lernmodell 202 wird beispielsweise wie nachfolgend beschrieben trainiert. Beispielsweise erfolgt ein Bereitstellen von Trainings-Bild- und/oder Videodaten 214, die jeweils vorbestimmte Bildattribute 215 von mindestens einer Domäne und jeweils mindestens ein Klassenlabel 216 aufweisen. Ferner kann ein Extrahieren der Bildattribute 215 aus den Trainings-Bild- und/oder Videodaten 214 durch das Attribut-Lernmodell 202 erfolgen. Optional erfolgt zum Trainieren ein Abgleichen der extrahierten Bildattribute 215 mit den vorbestimmten Bildattributen. Weiterhin optional kann ein Optimieren einer Kostenfunktion des Attribut-Lernmodells 202 in Abhängigkeit des Abgleichs und/oder bis zur Erreichung eines vorbestimmten Grenzwertes und/oder Abbruchkriteriums erfolgen. Das Attribut-Lernmodell 202 wird trainiert, Bildattribute 215 auszugeben, die einer bestimmten Klasse 218, basierend auf Vorwissen, zugeordnet werden können. Somit ist eine mittelbare Klassifizierung der jeweiligen Bild- und/oder Videodaten 214 möglich.

### Zu Abschnitt (C):

Die Inferenz des Verfahrens zum Klassifizieren von Bild- und/oder Videodaten kann wie folgt beschrieben werden. Es erfolgt ein Bereitstellen mindestens eines Bild- und/oder Videodatums 220, das Bildattribute 222 aufweist, die einer Klasse innerhalb mindestens einer Domäne zugeordnet sind. Ferner erfolgt ein Extrahieren der Bildattribute 222 aus dem mindestens einen Bild- und/oder Videodatum 220 mittels eines trainierten Attribut-Lernmodells 224, das dem Attribut-Lernmodell 202 nach dem Training entspricht. Die Bildattribute 222 können beispielsweise in tabellarischer Form extrahiert werden.

Mittels einer Vergleichsmetrik 230 erfolgt ein Vergleichen der extrahierten Bildattribute (222) mit Informationen über die mindestens eine Domäne, die in dem Knowledge-Graphen (204) umfasst sind. Auf Basis dieses Vergleichs erfolgt ein mittelbares Klassifizieren des mindestens eines Bild- und/oder Videodatums 220 als zu der Klasse 232 zugehörig. Dabei ist es unerheblich, ob die Bildattribute 222 bzw. ein Objekt mit derartigen Bildattributen 222 zuvor bereits einmal in einem Bild- und/oder Videodatum 220 umfasst waren, da durch den Vergleich und in Abhängigkeit des Vorwissens aus dem Knowledge-Graphen 204 vorzugsweise stets eine Klassenzuordnung erfolgen kann. Die Informationen über die mindestens eine Domäne, die in dem Knowledge-Graphen 204 umfasst sind, weisen dabei die Attribute 206 und/oder Beziehungen 207 zwischen Attributen 206 und/oder daraus ableitbare Regeln auf. Das Vergleichen S3 weist ein Abfragen der in dem Knowledge-Graphen 204 umfassten Informationen und, basierend darauf sowie basierend auf den extrahierten Bildattributen, ein Schlussfolgern mittels der Vergleichsmetrik 230, ob die extrahierten Bildattribute 222 einer bestimmten Informationsmenge und/oder Informationszusammensetzung des Knowlege-Graphen 204 zuordenbar sind, auf. Die Vergleichsmetrik 230 weist beispielhaft ein Inferenz-Reasoning und/oder ein Transitive Reasoning und/oder ein kontextuelles Reasoning und/oder ein abduktives Reasoning auf.

## Patentansprüche

1. Verfahren zum Klassifizieren mindestens eines Bild- und/oder Videodatums (220), das Verfahren aufweisend die Schritte:
- Bereitstellen (S1) mindestens eines Bild- und/oder Videodatums (220), das Bildattribute (222) aufweist, die einer Klasse innerhalb mindestens einer Domäne zugeordnet sind;
- Extrahieren (S2) der Bildattribute (222) aus dem mindestens einen Bild- und/oder Videodatum (220) mittels eines trainierten Attribut-Lernmodells (224, 202);
- Vergleichen (S3), mittels einer Vergleichsmetrik (230), der extrahierten Bildattribute (222) mit Informationen über die mindestens eine Domäne, die in einem Knowledge-Graphen (204) umfasst sind; und
- Klassifizieren (S4) des mindestens eines Bild- und/oder Videodatums (220) als zu der Klasse zugehörig basierend auf dem Vergleich.

2. Verfahren nach Anspruch 1, wobei das Attribut-Lernmodell (202) mittels der folgenden Schritte trainiert wird:
- Bereitstellen von Trainings-Bild- und/oder Videodaten (214), die jeweils vorbestimmte Bildattribute (215) von mindestens einer Domäne und jeweils mindestens ein Klassenlabel (216) aufweisen;
- Extrahieren von Bildattributen (215) aus den Trainings-Bild- und/oder Videodaten (214) durch das Attribut-Lernmodell (202);
- Abgleichen der extrahierten Bildattribute (215) mit den vorbestimmten Bildattributen; und
- Optimieren einer Kostenfunktion des Attribut-Lernmodells (202) in Abhängigkeit des Abgleichs und/oder bis zur Erreichung eines vorbestimmten Grenzwertes und/oder Abbruchkriteriums.

3. Verfahren nach Anspruch 1 oder 2, wobei die Informationen über die mindestens eine Domäne, die in dem Knowledge-Graphen (204) umfasst sind, Attribute (206) und/oder Beziehungen (207) zwischen Attributen (206) und/oder daraus ableitbare Regeln aufweisen.

4. Verfahren nach einem der vorstehenden Ansprüche, wobei das Vergleichen (S3) ein Abfragen der in dem Knowledge-Graphen (204) umfassten Informationen und, basierend darauf sowie basierend auf den extrahierten Bildattributen, ein Schlussfolgern mittels der Vergleichsmetrik (230), ob die extrahierten Bildattribute (222) einer bestimmten Informationsmenge und/oder Informationszusammensetzung des Knowlege-Graphen (204) zuordenbar sind, aufweist.

5. Verfahren nach Anspruch 3 und 4, wobei das Schlussfolgern mittels der Vergleichsmetrik (230) darauf basiert, dass die extrahierten Bildattribute mit Attributen (206) und/oder Beziehungen (207) zwischen Attributen (206) und/oder den daraus ableitbaren Regeln abgeglichen werden, bis eine Übereinstimmung erreicht ist, oder zumindest bis eine vorbestimmte Anzahl der Bildattribute (222) mit zumindest einer Teilmenge der Attribute (206) und/oder der Beziehungen (207) zwischen den Attributen (206) und/oder den daraus ableitbaren Regeln übereinstimmt.

6. Verfahren nach einem der vorstehenden Ansprüche, wobei die Vergleichsmetrik (230) ein Inferenz-Reasoning und/oder ein Transitive Reasoning und/oder ein kontextuelles Reasoning und/oder ein abduktives Reasoning aufweist.

7. Verfahren nach einem der vorstehenden Ansprüche, wobei das Attribut-Lernmodell (224, 202) ein Basismodell umfasst, das vorzugsweise mittels eines tiefen neuronalen Netzwerks trainiert wird.

8. Verfahren nach einem der vorhergehenden Ansprüche, wobei das mindestens eine Bild- und/oder Videodatum (214, 220) von mindestens einem optischen Sensor erfasst wird.

9. Verfahren nach einem der vorhergehenden Ansprüche, wobei das mindestens eine Bild- und/oder Videodatum (214, 220) durch Datenaugmentierung aus vorhandenen Bild- und/oder Videodaten erzeugt wird.

10. Verfahren nach einem der vorhergehenden Ansprüche, wobei ferner eine Fertigungslinie umfassend die Gerätezusammenstellung zum Erzeugen von vorgebbaren Erzeugnissen bereitgestellt wird.

11. Verfahren nach Anspruch 10, wobei das Verfahren nach der Bereitstellung der Fertigungslinie ferner den Schritt umfasst: Erzeugen zumindest eines vorgebbaren Erzeugnisses unter Verwendung der Gerätezusammenstellung.

12. System (1) zum Klassifizieren mindestens eines Bild- und/oder Videodatums (220), das System (1) aufweisend:
- eine Bereitstellungseinrichtung, die ausgebildet ist, mindestens ein Bild- und/oder Videodatum (220), das Bildattribute (222) aufweist, die einer Klasse innerhalb mindestens einer Domäne zugeordnet sind, bereitzustellen; und
- eine Auswerte- und/oder Recheneinrichtung, die ausgebildet ist, die Bildattribute (222) aus dem mindestens einen Bild- und/oder Videodatum (220) mittels eines trainierten Attribut-Lernmodells (224, 202) zu extrahieren, die extrahierten Bildattribute (222) mit Informationen über die mindestens eine Domäne, die in einem Knowledge-Graphen (204) umfasst sind, mittels einer Vergleichsmetrik (230) zu vergleichen, und das mindestens eine Bild- und/oder Videodatum (220), basierend auf dem Vergleich, als zu der Klasse zugehörig zu klassifizieren.

13. Auswerte- und/oder Steuereinrichtung eines bildgebenden Sensors, die dazu ausgebildet ist, ein Verfahren nach einem der Ansprüche 1 bis 11 auszuführen.

14. Computerprogramm mit Programmcode, um zumindest Teile eines Verfahrens nach einem der Ansprüche 1 bis 11 auszuführen, wenn das Computerprogramm auf einem Computer ausgeführt wird.

15. Computerlesbarer Datenträger mit Programmcode eines Computerprogramms, um zumindest Teile eines Verfahrens nach einem der Ansprüche 1 bis 11 auszuführen, wenn das Computerprogramm auf einem Computer ausgeführt wird.

## Geänderte Patentansprüche

### Geänderte Patentansprüche gemäss Regel 137(2) EPÜ.

1. Verfahren zum Klassifizieren mindestens eines Bild- und/oder Videodatums (220), das Verfahren aufweisend die Schritte:
- Bereitstellen (S1) mindestens eines Bild- und/oder Videodatums (220), das Bildattribute (222) aufweist, die einer Klasse innerhalb mindestens einer Domäne zugeordnet sind;
- Extrahieren (S2) der Bildattribute (222) aus dem mindestens einen Bild- und/oder Videodatum (220) mittels eines trainierten Attribut-Lernmodells (224, 202), wobei das Attribut-Lernmodell (224, 202) ein Basismodell umfasst, das mittels eines tiefen neuronalen Netzwerks trainiert wird;
- Vergleichen (S3), mittels einer Vergleichsmetrik (230), der extrahierten Bildattribute (222) mit Informationen über die mindestens eine Domäne, die in einem Knowledge-Graphen (204) umfasst sind, wobei das Vergleichen (S3) ein Abfragen der in dem Knowledge-Graphen (204) umfassten Informationen und, basierend darauf sowie basierend auf den extrahierten Bildattributen, ein Schlussfolgern mittels der Vergleichsmetrik (230), ob die extrahierten Bildattribute (222) einer bestimmten Informationsmenge und/oder Informationszusammensetzung des Knowledge-Graphen (204) zuordenbar sind, aufweist, wobei die Vergleichsmetrik (230) ein Inferenz-Reasoning und/oder ein Transitive Reasoning und/oder ein kontextuelles Reasoning und/oder ein abduktives Reasoning aufweist; und
- Klassifizieren (S4) des mindestens eines Bild- und/oder Videodatums (220) als zu der Klasse zugehörig basierend auf dem Vergleich.

2. Verfahren nach Anspruch 1, wobei das Attribut-Lernmodell (202) mittels der folgenden Schritte trainiert wird:
- Bereitstellen von Trainings-Bild- und/oder Videodaten (214), die jeweils vorbestimmte Bildattribute (215) von mindestens einer Domäne und jeweils mindestens ein Klassenlabel (216) aufweisen;
- Extrahieren von Bildattributen (215) aus den Trainings-Bild- und/oder Videodaten (214) durch das Attribut-Lernmodell (202);
- Abgleichen der extrahierten Bildattribute (215) mit den vorbestimmten Bildattributen; und
- Optimieren einer Kostenfunktion des Attribut-Lernmodells (202) in Abhängigkeit des Abgleichs und/oder bis zur Erreichung eines vorbestimmten Grenzwertes und/oder Abbruchkriteriums.

3. Verfahren nach Anspruch 1 oder 2, wobei die Informationen über die mindestens eine Domäne, die in dem Knowledge-Graphen (204) umfasst sind, Attribute (206) und/oder Beziehungen (207) zwischen Attributen (206) und/oder daraus ableitbare Regeln aufweisen.

4. Verfahren nach Anspruch 3, wobei das Schlussfolgern mittels der Vergleichsmetrik (230) darauf basiert, dass die extrahierten Bildattribute mit Attributen (206) und/oder Beziehungen (207) zwischen Attributen (206) und/oder den daraus ableitbaren Regeln abgeglichen werden, bis eine Übereinstimmung erreicht ist, oder zumindest bis eine vorbestimmte Anzahl der Bildattribute (222) mit zumindest einer Teilmenge der Attribute (206) und/oder der Beziehungen (207) zwischen den Attributen (206) und/oder den daraus ableitbaren Regeln übereinstimmt.

5. Verfahren nach einem der vorhergehenden Ansprüche, wobei das mindestens eine Bild- und/oder Videodatum (214, 220) von mindestens einem optischen Sensor erfasst wird.

6. Verfahren nach einem der vorhergehenden Ansprüche, wobei das mindestens eine Bild- und/oder Videodatum (214, 220) durch Datenaugmentierung aus vorhandenen Bild- und/oder Videodaten erzeugt wird, wobei durch die Datenaugmentierung künstlich neue Datenpunkte erzeugt werden, indem bestehende Daten transformiert und/oder modifiziert werden.

7. System (1) zum Klassifizieren mindestens eines Bild- und/oder Videodatums (220), das System (1) aufweisend:
- eine Bereitstellungseinrichtung, die ausgebildet ist, mindestens ein Bild- und/oder Videodatum (220), das Bildattribute (222) aufweist, die einer Klasse innerhalb mindestens einer Domäne zugeordnet sind, bereitzustellen; und
- eine Auswerte- und/oder Recheneinrichtung, die ausgebildet ist, die Bildattribute (222) aus dem mindestens einen Bild- und/oder Videodatum (220) mittels eines trainierten Attribut-Lernmodells (224, 202) zu extrahieren, wobei das Attribut-Lernmodell (224, 202) ein Basismodell umfasst, das mittels eines tiefen neuronalen Netzwerks trainiert wird, die extrahierten Bildattribute (222) mit Informationen über die mindestens eine Domäne, die in einem Knowledge-Graphen (204) umfasst sind, mittels einer Vergleichsmetrik (230) zu vergleichen, wobei das Vergleichen ein Abfragen der in dem Knowledge-Graphen (204) umfassten Informationen und, basierend darauf sowie basierend auf den extrahierten Bildattributen, ein Schlussfolgern mittels der Vergleichsmetrik (230), ob die extrahierten Bildattribute (222) einer bestimmten Informationsmenge und/oder Informationszusammensetzung des Knowledge-Graphen (204) zuordenbar sind, aufweist, wobei die Vergleichsmetrik (230) ein Inferenz-Reasoning und/oder ein Transitive Reasoning und/oder ein kontextuelles Reasoning und/oder ein abduktives Reasoning aufweist, und das mindestens eine Bild- und/oder Videodatum (220), basierend auf dem Vergleich, als zu der Klasse zugehörig zu klassifizieren.

8. Auswerte- und/oder Steuereinrichtung eines bildgebenden Sensors, die dazu ausgebildet ist, ein Verfahren nach einem der Ansprüche 1 bis 6 auszuführen.

9. Computerprogramm mit Programmcode, um zumindest Teile eines Verfahrens nach einem der Ansprüche 1 bis 6 auszuführen, wenn das Computerprogramm auf einem Computer ausgeführt wird.

10. Computerlesbarer Datenträger mit Programmcode eines Computerprogramms, um zumindest Teile eines Verfahrens nach einem der Ansprüche 1 bis 6 auszuführen, wenn das Computerprogramm auf einem Computer ausgeführt wird.
